# EUROPÄISCHE PATENTSCHRIFT

(11) **EP 3 069 641 B1**
(45) Veröffentlichungstag und Bekanntmachung des Hinweises auf die Patenterteilung: **20.06.2018**
(21) Anmeldenummer: 16156847.2
(22) Anmeldetag: 23.02.2016
(51) Int. Cl.: A47J 31/58, H02H 5/04, H02H 5/08

(54) **HEISSGETRÄNKEZUBEREITUNGSVORRICHTUNG, INSBESONDERE KAFFEEVOLLAUTOMAT, UND VERFAHREN ZU IHREM BETRIEB**
HOT BEVERAGE PREPARATION DEVICE, IN PARTICULAR A FULLY AUTOMATIC COFFEE MAKER, AND METHOD OF OPERATING THE SAME
DISPOSITIF DE PREPARATION DE BOISSONS CHAUDES, EN PARTICULIER MACHINE A CAFE ENTIEREMENT AUTOMATIQUE ET PROCEDE DE FONCTIONNEMENT

(30) Priorität: 20.03.2015 DE 102015205124
(43) Veröffentlichungstag der Anmeldung: 21.09.2016
(73) Patentinhaber: BSH Hausgeräte GmbH, 81739 München (DE)
(72) Erfinder: Kropp, Kai Achim, 93192 Wald (DE)

(56) Entgegenhaltungen:
- DE-A1-102007 042 435
- DE-A1-102010 062 522
- DE-A1-102014 205 161
- US-A1- 2007 097 566
- US-A1- 2012 087 052

## Beschreibung

Die Erfindung betrifft eine Heißgetränkezubereitungsvorrichtung, insbesondere einen Kaffeevollautomaten, mit welchem insbesondere Heißgetränke oder heiße flüssige Lebensmittel, wie beispielsweise Kaffee, Tee, heiße Milch, Kakaogetränke oder auch Suppen zubereitet werden können. Ferner betrifft die vorliegende Erfindung ein entsprechendes Verfahren zum Betreiben einer Heißgetränkezubereitungsvorrichtung.

Nachfolgend werden die Begriffe "Heißgetränkezubereitungsvorrichtung", "Kaffeevollautomat" und "KVA" gleichbedeutend benutzt, so dass einer dieser Begriffe stets die anderen beinhaltet und sie daher gegeneinander austauschbar sind.

Der KVA beinhaltet zumeist mindestens ein Mahlwerk zum Mahlen von Kaffeebohnen, einen Durchlauferhitzer für Wasser, eine Hochdruckpumpe zum Pumpen von heißem/kaltem Wasser, z.B. mit einem Druck von bis zu 15 bar, eine Brühgruppe mit einem Antrieb zum Pressen von gemahlenem Kaffee und mit einer Brühkammer. Weiterhin sind regelmäßig eine Spannungsversorgung (z.B. 230 VAC, 110 VAC oder 12 VDC), sowie eine Bedieneinheit mit Schaltern/Tastern und Anzeigeelementen, sowie eine Steuerelektronik zum Schalten/Regeln der einzelnen und ggf. auch weiterer Komponenten wie Sensoren, Schaltern, Stellelementen/Aktoren, Magnetventilen und Dosiereinrichtungen der KVA vorhanden.

Zudem können weitere Zusatzfunktionen und Zusatzelemente in einem KVA vorhanden sein, wie z.B. ein zweites Heizelement für Teewasser oder Wasserdampf für Milchschaum, ein Tassenwärmer mit separatem Heizelement etc. Werden sie elektronisch angetrieben, stellen sie elektrische Verbraucher des KVA dar.

Üblicherweise werden die elektrischen Verbraucher des KVA zumindest teilweise mittels eines im Lastkreis in Reihe mit den elektrischen Verbrauchern befindlichen Halbleiterschalters in Form eines TRIAC, auch Triode für Wechselstrom, geschaltet bzw. leistungsgesteuert. Im Falle eines Defektes im Lastkreis des TRIAC-Ausgangs, wird der TRIAC meist irreparabel geschädigt, was bis zur Zerstörung des Gerätes führen kann, so dass weitere Sicherheitsmaßnamen zur Absicherung der elektrischen Verbraucher des KVA nötig sind.

Bekannt sind hierbei thermische Schalter an den elektrischen Verbrauchern des KVA, z.B. Schmelzsicherungen, welche aber bei einer Überlast irreversibel zerstört werden und sehr träge auf eine Überlast reagieren sowie zusätzlichen Bauraum im KVA benötigen.

Die DE 10 2010 062 522 A1 offenbart ein Haushaltsgerät, auch in Form eines KVA, mit einem elektrischen Verbraucher, der mit elektrischen Netzanschlüssen des Haushaltsgeräts gekoppelt ist, einem in Reihe zum elektrischen Verbraucher geschalteten Halbleiterschalter, insbesondere einem TRIAC, und einer Steuereinrichtung zum Ansteuern des Halbleiterschalters, wobei eine Wandlerschaltung eingangsseitig mit einem zwischen dem Halbleiterschalter und dem elektrischen Verbraucher liegenden Abgriffknoten und ausgangsseitig mit einem Messeingang der Steuereinrichtung gekoppelt ist. Sie ist dazu ausgebildet, an dem Abgriffknoten eine elektrische Wechselspannung abzugreifen, die elektrische Wechselspannung in ein Messsignal, insbesondere eine elektrische Gleichspannung, umzuwandeln und dieses an den Messeingang der Steuereinrichtung abzugeben. Die Steuereinrichtung ist dazu ausgelegt, anhand des Messsignals auf einen Kurzschluss des Halbleiterschalters zurückzuschließen.

Bei dieser Schutzschaltung erfolgt keine Überwachung der Temperatur des Verbrauchers und/oder der TRIAC. Ein Defekt des TRIAC kann daher lediglich über die elektrische Spannung über dem TRIAC festgestellt werden. Damit kann die Schutzschaltung lediglich einen Teil der Möglichkeiten eines Defektes des TRIAC abdecken, da sie nur auf eine Veränderung der Spannung über den Leistungszweig des TRIAC und nicht z.B. auf eine unzulässige Temperaturerhöhung im Bereich des TRIAC und ggfs. des elektrischen Verbrauchers reagiert.

Aufgabe der vorliegenden Erfindung ist es daher, eine Heißgetränkezubereitungsvorrichtung mit einer verbesserten Fehlererkennung bereitzustellen.

Diese Aufgabe wird erfindungsgemäß durch eine Heißgetränkezubereitungsvorrichtung mit den Merkmalen des unabhängigen Patentanspruchs 1 und ein Verfahren mit den Merkmalen des unabhängigen Patentanspruchs 10 gelöst.

Demgemäß ist eine Heißgetränkezubereitungsvorrichtung, insbesondere ein Kaffeevollautomat, vorgesehen mit einem steuerbaren Schalter, welcher ausgebildet ist, einen Strom durch eine Anzahl, also einen oder mehrere von elektrischen Verbrauchern in der Heißgetränkezubereitungsvorrichtung zu steuern, mit einer ersten Recheneinrichtung, welche ausgebildet ist, ein Schaltsteuersignal zu erzeugen und dem Schalter bereitzustellen, und mit einer Überwachungseinrichtung, welche ausgebildet ist, mindestens eine elektrische Größe an einem Steuereingang des Schalters zu erfassen und basierend auf der erfassten mindestens einen elektrischen Größe eine Temperatur und einen Strom in dem Schalter zu berechnen, wobei die Überwachungseinrichtung ausgebildet ist, den Schalter zu deaktivieren während die Temperatur einen vorgegebenen Temperaturbereich und der Strom einen vorgegebenen Strombereich überschreitet oder unterschreitet, wobei
die Überwachungseinrichtung dazu ausgebildet ist, zum Erfassen der Temperatur eine zeitliche Änderung eines Mittelwerts des Stroms zu bestimmen. Das erfindungsgemäße Verfahren zum Betreiben einer Heißgetränkezubereitungsvorrichtung mit einem steuerbaren Schalter und einer Recheneinrichtung, welche dem steuerbaren Schalter ein Schaltsteuersignal bereitstellt, umfasst die Schritte
- Erfassen mindestens einer elektrischen Größe an einem Steuereingang des Schalters,
- Berechnen einer Temperatur und eines Stroms in dem Schalter basierend auf der erfassten mindestens einen elektrischen Größe, und
- Deaktivieren des Schalters während die Temperatur einen vorgegebenen Temperaturbereich und der Strom einen vorgegebenen Strombereich überschreitet oder unterschreitet, wobei
   zum Erfassen der Temperatur eine zeitliche Änderung eines Mittelwerts des Stroms bestimmt wird.
Elektrische Verbraucher können die oben zum Teil bereits erwähnten Heizungen, Pumpen, Motoren, Magnetventile oder dergleichen in der Heißgetränkezubereitungsvorrichtung sein. Ferner ist unter dem Deaktivieren des Schalters zu verstehen, dass der Schalter geöffnet wird bzw. in einen nicht-leitenden Zustand versetzt wird. Das Deaktivieren kann dabei ein temporärer Zustand im Sinne eines Taktens sein, der z.B. beendet werden kann, wenn die Temperatur wieder in dem vorgegebenen Temperaturbereich und/oder der Strom in dem vorgegebenen Strombereich liegt.

Der Temperaturbereich kann z.B. einen maximalen Temperaturbereich angeben, in welchem sich die Temperatur des steuerbaren Schalters während des Betriebs der Heißgetränkezubereitungsvorrichtung bewegen darf. Eine Temperatur des TRIAC, welche über oder unter dem vorgegebenen Temperaturbereich liegt, kann auf einen Fehler des TRIAC oder der elektrischen Verbraucher hindeuten. Das Gleiche gilt analog für den Strombereich.

Der vorliegenden Erfindung liegt die Erkenntnis zugrunde, dass bei einem steuerbaren Schalter aus elektrischen Größen an dem Steuereingang des steuerbaren Schalters auf die Temperatur in dem Schalter oder den durch den Schalter fließenden Strom geschlossen werden kann. Die Erfindung nutzt diese Erkenntnis, um eine Heißgetränkezubereitungsvorrichtung bereitzustellen, bei welcher eine Überwachungseinrichtung mit dem Steuereingang des steuerbaren Schalters gekoppelt ist und die elektrische Größe an diesem erfasst. Die erfasste elektrische Größe nutzt die Überwachungseinrichtung, um die Temperatur in dem Schalter oder den durch den Schalter fließenden Strom zu bestimmen und z.B. bei einer Übertemperatur oder einem Überstrom in dem steuerbaren Schalter den steuerbaren Schalter und damit die elektrischen Verbraucher zu deaktivieren.

Erfindungsgemäß können das Deaktivieren des Schalters und damit das Abschalten des Stroms deutlich schneller erfolgen, als z.B. die einer Schmelzsicherung oder einem Sicherungsautomaten oder aber auch bei Schutzschaltungen, die lediglich eine Überwachung des elektrischen Stroms durch den Schalter bzw. den entsprechenden Verbraucher aufweisen. Da lediglich eine Erfassung einer elektrischen Größe an dem Steuereingang des steuerbaren Schalters erfolgt, kann eine sehr einfache Überwachungseinrichtung genutzt werden, die keine Bauteile aufweisen muss, die mit der Versorgungsspannung der Heißgetränkezubereitungsvorrichtung, z.B. 230Volt oder 110Volt, betrieben werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen einer anderen Anspruchskategorie weitergebildet sein können und die Merkmale verschiedener Ausführungsbeispiele zu neuen Ausführungsbeispielen kombiniert werden können.

In einer vorteilhaften Ausführungsform kann der steuerbare Schalter als TRIAC ausgebildet sein. Bei einem TRIAC ist die Spannung, welche zwischen dem Steuereingang, also dem Gate-Anschluss, und Masse abfällt, abhängig von der aktuellen Temperatur des TRIAC und dem momentanen Strom, der durch den TRIAC, fließt. Somit wird durch eine einfache Spannungsüberwachung an dem Steuereingang des TRIAC eine Überwachung der Temperatur und des Stroms in dem TRIAC möglich.

In einer weiteren vorteilhaften Ausführungsform kann die Überwachungseinrichtung einen Analog-Digital-Wandler aufweisen, welcher mit dem Steuereingang des steuerbaren Schalters gekoppelt und dazu ausgebildet ist, als die elektrische Größe eine Spannung, welche zwischen dem Steuereingang und einem Bezugspotential anliegt, zu erfassen. Durch die Wandlung in einen digitalen Wert kann die Spannung an dem Steuereingang sehr einfach weiterverarbeitet werden.

In einer weiteren vorteilhaften Ausführungsform kann die Überwachungseinrichtung einen Verstärker aufweisen, welcher zwischen dem Analog-Digital-Wandler und dem Steuereingang des steuerbaren Schalters angeordnet ist. Dies ermöglicht es auch sehr kleine Spannungen an dem Steuereingang des steuerbaren Schalters zu erfassen und zu verarbeiten.

In einer weiteren vorteilhaften Ausführungsform kann die Überwachungseinrichtung eine zweite Recheneinrichtung und einen Speicher aufweisen. Ferner ist die zweite Recheneinrichtung ausgebildet, zu unterschiedlichen Zeitpunkten erfasste Werte der elektrischen Größe in dem Speicher zu speichern und basierend auf einer vorgegebenen Last, deren Strom durch den steuerbaren Schalter gesteuert wird, und den in dem Speicher gespeicherten Werten der elektrischen Größe den durch den Schalter fließenden Strom und die Temperatur des Schalters zu berechnen. Durch das Speichern der erfassten Werte der elektrischen Größe kann eine kontinuierliche Überwachung des Schalters durchgeführt werden und zeitliche Veränderung der Temperatur bzw. des Stroms in dem Schalter beobachtet werden.

In einer weiteren vorteilhaften Ausführungsform können in dem Speicher Standardwerte für die Temperatur in dem Schalter und für den Sollwert des durch den Schalter fließenden Stroms gespeichert werden, welche die jeweilige Größe zu einem Einschaltzeitpunkt der Heißgetränkezubereitungsvorrichtung kennzeichnen, zu welchem die Stromversorgung der Heißgetränkezubereitungsvorrichtung eingeschaltet wird. Unter dem Einschaltzeitpunkt kann auch der Zeitpunkt verstanden werden, zu welchem die Heißgetränkezubereitungsvorrichtung aus einem Stand-By Zustand oder Energiesparzustand in einen Betriebszustand wechselt. Insbesondere ist der Einschaltzeitpunkt der Zeitpunkt, zu welchem der steuerbare Schalter angesteuert wird, um die elektrischen Verbraucher mit elektrischer Energie zu versorgen.

In einer weiteren vorteilhaften Ausführungsform kann die Überwachungseinrichtung eine Unterbrechungseinrichtung aufweisen, welche ausgebildet ist, zum deaktivieren des Schalters die Verbindung zwischen der ersten Recheneinrichtung und dem Schalter zu unterbrechen. Durch eine unabhängige Unterbrechungseinrichtung wird es möglich, den Schalter sicher zu deaktivieren, auch wenn die erste Recheneinrichtung defekt ist und fehlerhafte Schaltsteuersignale an den Schalter übermittelt.

In einer weiteren vorteilhaften Ausführungsform können die zweite Recheneinrichtung und der Speicher als Elemente der ersten Recheneinrichtung ausgebildet sein. Dies ermöglicht die Nutzung freier Ressourcen der ersten Recheneinrichtung um die Überwachungseinrichtung darzustellen. Dadurch können Bauteile in der Heißgetränkezubereitungsvorrichtung eingespart werden und deren Komplexität reduziert werden.

In einer weiteren vorteilhaften Ausführungsform kann die zweite Recheneinrichtung z.B. als ein Programmmodul ausgebildet sein, welches in der ersten Recheneinrichtung neben dem Steuerprogramm für die Heißgetränkezubereitungsvorrichtung ausgeführt wird. Alternativ kann die zweite Recheneinrichtung als Funktion in dem Steuerprogramm für die Heißgetränkezubereitungsvorrichtung integriert sein.

In einer weiteren vorteilhaften Ausführungsform kann die zweite Recheneinrichtung z.B. als Interrupt-Routine eines Timer-Interrupts ausgebildet sein, welche in vorgegebenen Zeitintervallen ausgeführt wird. Dies kann insbesondere unabhängig von dem Steuerprogramm für die Heißgetränkezubereitungsvorrichtung erfolgen. Dies ermöglicht es, die Funktion der zweiten Recheneinrichtung auch dann noch bereitzustellen, wenn auf Grund eines Fehlers das Steuerprogramm für die Heißgetränkezubereitungsvorrichtung nicht mehr korrekt ausgeführt wird.

In einer weiteren vorteilhaften Ausführungsform kann die Überwachungseinrichtung ausgebildet sein, zum Deaktivieren des Schalters einem Steuermodul der ersten Recheneinrichtung ein Signal zum Deaktivieren des Schaltsteuersignals zu übermitteln. Beispielsweise kann das Signal als Software-Flag oder Variable an das Steuerprogramm für die Heißgetränkezubereitungsvorrichtung übermittelt werden, welches daraufhin das Schaltsteuersignal nicht weiter ausgibt bzw. ein Schaltsteuersignal ausgibt, welches den Schalter in einen geöffneten oder nicht-leitenden Zustand versetzt.

In einer weiteren vorteilhaften Ausführungsform kann bei Überschreiten und/oder Unterschreiten des vorgegebenen Temperaturbereichs oder des vorgegebenen Strombereichs eine Status-Anzeige auf einem Display der Heißgetränkezubereitungsvorrichtung angezeigt und/oder eine Fehlermeldung über eine Schnittstelle nach außerhalb der Heißgetränkezubereitungsvorrichtung gegeben. Es kann z.B. eine Fehlermeldung z.B. "Heizung gestört - bitte Service kontaktieren" angezeigt werden. Ferner kann eine datentechnische Vernetzung der erfindungsgemäßen Heißgetränkezubereitungsvorrichtung über LAN, WLAN oder PowerLAN/PLC mit anderen Haushaltsgeräten, darunter z.B. auch mit PCs, oder über andere Schnittstelle, wie z.B. einer Bluetooth-Schnittstelle oder dergleichen, mit Endgeräten wie einem Festnetztelefon, einem Tablet, einem Smartphone oder dergleichen vorgesehen sein. Dies ermöglicht eine automatische Fehlermeldung z.B. an ein Servicezentrum via Internet oder über eine drahtlose Funkverbindung.

Die obigen Ausgestaltungen und Weiterbildungen können sich, sofern sinnvoll, beliebig miteinander kombinieren lassen. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden unter Hinweis auf die beigefügten Figuren anhand von Ausführungsbeispielen noch näher erläutert. Dabei sind in den verschiedenen Figuren gleiche Komponenten mit identischen Bezugsziffern versehen. Es zeigen:
- Figur 1:: eine schematische Darstellung einer Ausführungsform der erfindungsgemäßen Heißgetränkezubereitungsvorrichtung,
- Figur 2:: ein Ablaufdiagramm einer Ausführungsform des erfindungsgemäßen Verfahrens,
- Figur 3:: eine schematische Darstellung einer weiteren Ausführungsform der erfindungsgemäßen Heißgetränkezubereitungsvorrichtung.

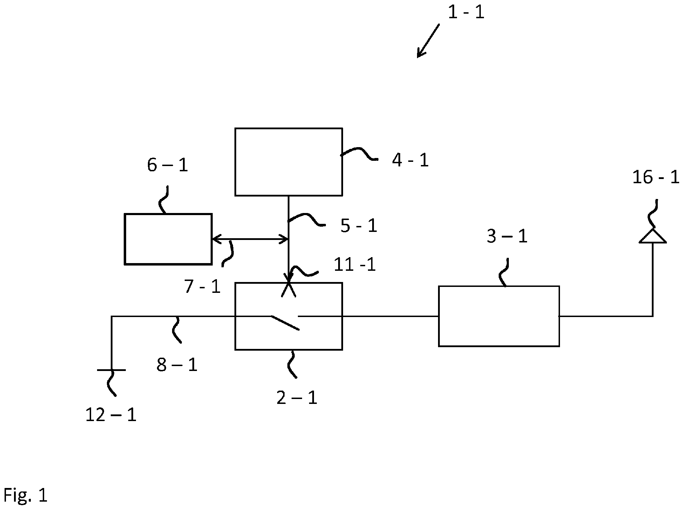

Die Heißgetränkezubereitungsvorrichtung 1-1 der Figur 1 weist eine erste Recheneinrichtung 4-1 auf, die dazu ausgebildet ist, den Zubereitungsvorgang eines Heißgetränks in der Heißgetränkezubereitungsvorrichtung 1-1 zu steuern. Dazu kann die erste Recheneinrichtung 4-1 elektrische Verbraucher 3-1 in der Heißgetränkezubereitungsvorrichtung 1-1 über den steuerbaren Schalter 2-1 ein- und ausschalten bzw. deren Leistung regeln. Der steuerbare Schalter 2-1 ist hierfür über eine Signalleitung, über welche die erste Recheneinrichtung 4-1 ein Schaltsteuersignal 5-1 bereitstellt, mit der ersten Recheneinrichtung 4-1 gekoppelt.

Empfängt der steuerbare Schalter 2-1 ein Schaltsteuersignal 5-1 zum Einschalten der elektrischen Verbraucher 3-1 schließt der steuerbare Schalter 2-1 den elektrischen Kontakt, sodass ein Strom 8-1 von einem Bezugspotential 12-1 zu einem Versorgungsanschluss 16-1 fließt. Unter "Schließen des elektrischen Kontakts" ist hier lediglich zu verstehen, dass ein Stromfluss durch den Schalter ermöglicht wird. Dazu ist es nicht notwendig, dass tatsächlich ein elektrischer Kontakt geschlossen wird. Vielmehr kann z.B. in einem Halbleiterschalter, wie z.B. einem TRIAC, die Schaltstrecke niederohmig gestellt werden.

In Figur 1 ist ferner eine Überwachungseinrichtung 6-1 dargestellt, die mit der Steuerleitung zwischen der ersten Recheneinrichtung 4-1 und dem steuerbaren Schalter 2-1 gekoppelt ist, um eine elektrische Größe 7-1 an dem Steuereingang 11-1 des steuerbaren Schalters 2-1 zu erfassen. Die elektrische Größe 7-1 kann z.B. eine Spannung zwischen dem Steuereingang 11-1 und dem Bezugspotential 12-1 sein.

Die Überwachungseinrichtung 6-1 berechnet basierend auf der erfassten elektrischen Größe 7-1 eine Temperatur bzw. den Strom 8-1 in dem Schalter 2-1 und deaktiviert diesen für den Fall, dass die Temperatur einen vorgegebenen Temperaturbereich überschreitet bzw. unterschreitet oder der Strom 8-1 einen vorgegebenen Strombereich überschreitet bzw. unterschreitet.

Beispielsweise kann für die Berechnung des Stroms 8-1 eine lineare Gleichung mit einem ersten Koeffizienten für die Steigung und einem zweiten Koeffizienten für den Offset vorgegeben sein. Alternativ können auch quadratische Gleichungen oder andere Berechnungsvorschriften vorgegeben sein.

Die Temperatur kann z.B. durch die Beobachtung einer zeitlichen Veränderung des Stroms 8-1 bzw. eines Mittelwerts des Stroms 8-1 und eine entsprechende Umrechnungsvorschrift erfasst werden.

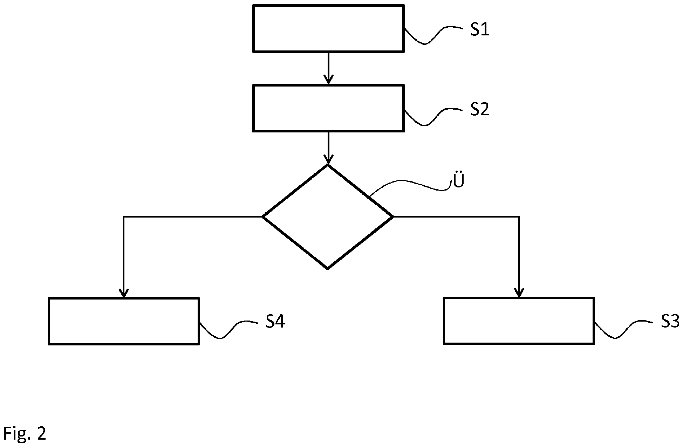

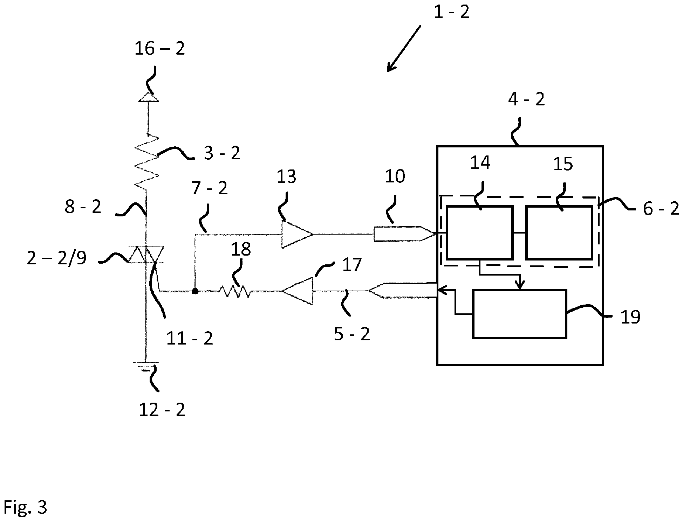

Das Verfahren nach Figur 2 dient dem Betreiben einer Heißgetränkezubereitungsvorrichtung 1-1; 1-2, wie sie z.B. in Figuren 1 und 3 dargestellt ist, mit einem steuerbaren Schalter 2-1; 2-2 und einer Recheneinrichtung 4-1; 4-2, welche dem steuerbaren Schalter 2-1; 2-2 ein Schaltsteuersignal 5-1, 5-2 bereitstellt.

Das Verfahren sieht vor, in einem Schritt S1 mindestens eine elektrische Größe 7-1; 7-2 an einem Steuereingang 11-1; 11-2 des Schalters 2-1; 2-2 zu erfassen. Basierend auf der erfassten mindestens einen elektrischen Größe 7-1; 7-2 können in einem Schritt S2 eine Temperatur und/oder ein Strom 8-1; 8-2 in dem Schalter 2-1; 2-2 berechnet werden. Nach der Berechnung der Temperatur bzw. des Stroms 8-1; 8-2 in dem Schalter 2-1; 2-2 wird überprüft, Ü, ob die die Temperatur einen vorgegebenen Temperaturbereich übersteigt oder unterschreitet oder ob der Strom 8-1; 8-2 einen vorgegebenen Strombereich übersteigt bzw. unterschreitet. Wird festgestellt, dass die Temperatur sich innerhalb des vorgegebenen Temperaturbereichs befindet bzw. dass sich der Strom 8-1; 8-2 in dem vorgegebenen Strombereich befindet, wird in dem Schritt S4 das Steuersignal 5-1; 5-2, z.B. von einer erfindungsgemäßen ersten Recheneinrichtung 4-1; 4-2, regulär erzeugt. Es findet folglich keine Beeinflussung des steuerbaren Schalters 2-1; 2-2 bzw. des Steuersignals 5-1; 5-2 durch das erfindungsgemäßen Verfahren statt. Wird bei der Überprüfung, Ü, aber festgestellt, dass die Temperatur sich außerhalb des vorgegebenen Temperaturbereichs befindet bzw. dass sich der Strom 8-1; 8-2 außerhalb des vorgegebenen Strombereichs befindet, wird in einem Schritt S3 der steuerbare Schalter 2-1; 2-2 deaktiviert. Dadurch wird sowohl der steuerbare Schalter 2-1; 2-2 z.B. vor einer Überhitzung geschützt, als auch die durch den steuerbaren Schalter 2-1; 2-2 angesteuerten Verbraucher 3-1; 3-2.

Die Heißgetränkezubereitungsvorrichtung 1-2 der Figur 3 basiert auf der Heißgetränkezubereitungsvorrichtung 1-1 der Figur 1 und unterscheidet sich von ihr dahingehend, dass zwischen dem Bezugspotential 12-2 und dem Versorgungsanschluss 16-2 ein TRIAC 9 als steuerbarer Schalter 2-2 mit einem als Wiederstand 3-2 dargestellten Verbraucher 3-2 in einer Serienschaltung angeordnet ist. Die erste Recheneinrichtung 4-2 stellt an einem Ausgang ein Schaltsteuersignal 5-2 bereit, welches an einen Pulstreiber 17 weitergleitet wird, der das Signal über einen Widerstand 18 an den Steuereingang 11-2 des steuerbaren Schalters 2-2/9 weiterleitet.

Ferner ist die Überwachungseinrichtung 6-2, welche eine zweite Recheneinrichtung 14 und einen Speicher 15 aufweist, als ein Modul der ersten Recheneinrichtung 4-2 ausgebildet. Die Überwachungseinrichtung 6-2 erfasst die Spannung 7-2 an dem Steuereingang 11-2, indem diese über einen Verstärker 13 verstärkt und über einen Analog-Digital-Wandler 10 in einen digitalen Wert gewandelt wird, der von der zweiten Recheneinrichtung 14 ausgewertet wird.

In einer Ausführungsform kann die erste Recheneinrichtung 4-2 z.B. als ein Mikrocontroller ausgebildet sein, der das Schaltsteuersignal 5-2 über einen I/O-Pin ausgibt. Der Analog-Digital-Wandler 10 kann als ein zu der ersten Recheneinrichtung 4-2 externer Analog-Digital-Wandler 10 ausgebildet sein oder als ein interner Analog-Digital-Wandler 10 der ersten Recheneinrichtung 4-2 ausgebildet sein.

Bei der Spannung 7-2 an dem Steuereingang des TRIAC 9, also der Gate-Spannung 7-2 des TRIAC 9, handelt es sich um die Vorwärtsspannung eines P/N-Übergangs in dem TRIAC 9. Diese Spannung 7-2 ist von dem durch den TRIAC 9 fließenden Strom 8-2 und der Temperatur des TRIAC 9 abhängig und kann z.B. in einem Bereich von unter 1 Volt liegen. Bei steigendem Strom 8-2 steigt auch die Gate-Spannung 7-2. Dagegen sinkt die Gate-Spannung 7-2 bei steigender Temperatur des TRIAC 9.

Handelt es sich bei der ersten Recheneinrichtung 4-2 um einen Mikrocontroller, welcher mit einer Betriebsspannung von 3.3 Volt oder 5 Volt arbeitet, kann durch den Verstärker 13 die Gate-Spannung 7-2 des TRIAC 9 derart verstärkt werden, dass der jeweilige Spannungsbereich von 3.3 Volt oder 5 Volt voll ausgenutzt wird. Dadurch kann die Sensitivität der Überwachungseinrichtung 6-2 maximiert werden.

Ist die Last bekannt, welche durch den Schalter 2-2 versorgt wird, kann aus dem Strom 8-2, welcher basierend auf der Gate-Spannung 7-2 des TRIAC 9 berechnet wird, auf einen Fehler des elektrischen Verbrauchers 3-2 geschlossen werden.

In dem Speicher 15 kann die zweite Recheneinrichtung 14 erfasste Werte der Gate-Spannung 7-2 des TRIAC 9 speichern. Dies ermöglicht es, zur Erfassung der Temperatur des TRIAC 9 z.B. den Drift des Mittelwertes der erfassten Werte der Gate-Spannung 7-2 zu berechnen. Beispielsweise kann bei einem sinkenden Mittelwert auf eine Erwärmung des TRIAC 9 und bei einem steigenden Mittelwert auf eine Abkühlung des TRIAC 9 geschlossen werden.

Der Speicher 15 kann ferner Kalibrierwerte bzw. Standardwerte für die Temperatur in dem Schalter 2-2 bzw. TRIAC 9 und für den Sollwert des durch den Schalter 2-2 bzw. TRIAC 9 fließenden Stroms 8-2 aufweisen. Diese Werte können z.B. bei einer Kalibrierung während der Produktion der Heißgetränkezubereitungsvorrichtung 1-2 in dem Speicher 15 hinterlegt werden. Die Kalibrierwerte bzw. Standardwerte können z.B. auch die oben bereits erwähnten Koeffizienten für die Berechnung des Stroms 8-2 aus der Gate-Spannung des TRIAC 9 aufweisen.

Beispielsweise können diese Werte genutzt werden, um in dem Moment des Einschaltens der elektrischen Verbraucher 3-2 über die Gate-Spannung 7-2 den Strom 8-2 zu erfassen und zu überprüfen, ob der durch die elektrischen Verbraucher 3-2 fließende Strom innerhalb zulässiger Betriebsgrenzen liegt.

Die vorliegende Erfindung ermöglicht folglich eine Überwachung der ordnungsgemäßen Funktion der elektrischen Verbraucher 3-2, z.B. bei jedem Einschalten der Heißgetränkezubereitungsvorrichtung 1-2, um mögliche Schäden frühzeitig erkennen zu können. Beispielsweise kann ein erhöhter Strombedarf eines Motors auf einen Schaden an der Isolierung der Wicklungsdrähte hindeuten. Bei einer elektrischen Pumpe kann ein erhöhter Strombedarf z.B. auf eine Verstopfung der Zu- oder Ableitung der Pumpe hindeuten. Ein Überhitzen der Heißgetränkezubereitungsvorrichtung 1-2 bzw. des TRIAC 9 kann dadurch wirkungsvoll verhindert werden, dass solche möglichen Schäden frühzeitig detektiert werden können

Der Pulstreiber 17 der Figur 3 ist lediglich optional und kann in einer Ausführungsform ferner ausgebildet sein, ein Signal an den Steuereingang 11-2 bzw. Gate-Anschluss 11-2 des TRIAC 9 lediglich dann auszugeben, wenn das Schaltsteuersignal 5-2 ein vorgegebenes Pulsmuster bzw. eine vorgegebene Pulsfrequenz aufweist. Damit kann der TRIAC 9 gegen einen fehlerhaften, z.B. dauerhaft auf einen positiven Signalpegel gestellten, Ausgang der ersten Recheneinrichtung 4-2 gesichert werden.

Da die Gate-Spannung 7-2 des TRIAC 9 sich unverzüglich mit dem durch den TRIAC 9 fließenden Strom 8-2 ändert, kann die Schutzfunktion, welche durch die Überwachungseinrichtung 6-2 bereitgestellt wird, deutlich schneller einsetzen, als dies bei herkömmlichen Schutzeinrichtungen, z.B. Schmelzsicherungen, der Fall ist.

In einer Ausführungsform kann bei einem erkannten Fehler eine Fehlermeldung auf einer Anzeige der Heißgetränkezubereitungsvorrichtung 1-2 angezeigt werden. Ferner kann über eine Datenverbindung der Fehler z.B. auch an ein Servicezentrum übermittelt werden.

Die vorliegende Erfindung wurde anhand bevorzugter Ausführungsformen vorstehend beschrieben. Auf diese ist die vorliegende Erfindung aber nicht beschränkt. Vielmehr kann die vorliegende Erfindung auf vielfältige Art und Weise modifiziert werden, ohne vom Kern der Erfindung abzuweichen.

### Bezugszeichenliste

- 1-1; 1-2: Heißgetränkezubereitungsvorrichtung
- 2-1; 2-2: steuerbaren Schalter
- 3-1; 3-2: elektrischen Verbrauchern
- 4-1; 4-2: erste Recheneinrichtung
- 5-1, 5-2: Schaltsteuersignal
- 6-1; 6-2: Überwachungseinrichtung
- 7-1; 7-2: elektrische Größe
- 8-1; 8-2: Strom
- 9: TRIAC
- 10: Analog-Digital-Wandler
- 11-1; 11-2: Steuereingang
- 12-1; 12-2: Bezugspotential
- 13: Verstärker
- 14: zweite Recheneinrichtung
- 15: Speicher
- 16-1; 16-2: Versorgungsanschluss
- 17: Pulstreiber
- 18: Widerstand
- 19: Steuerprogramm
- S1 - S4: Verfahrensschritte
- Ü: Überprüfung

## Patentansprüche

1. Heißgetränkezubereitungsvorrichtung (1-1; 1-2), insbesondere Kaffeevollautomat,
- mit einem steuerbaren Schalter (2-1; 2-2), welcher dazu ausgebildet ist, einen Strom (8-1; 8-2) durch eine Anzahl von elektrischen Verbrauchern (3-1; 3-2) in der Heißgetränkezubereitungsvorrichtung (1-1; 1-2) zu steuern;
- mit einer ersten Recheneinrichtung (4-1; 4-2), welche dazu ausgebildet ist, ein Schaltsteuersignal (5-1, 5-2) zu erzeugen und dem Schalter (2-1; 2-2) bereitzustellen; und
- mit einer Überwachungseinrichtung (6-1; 6-2), welche dazu ausgebildet ist, mindestens eine elektrische Größe (7-1; 7-2) an einem Steuereingang (11-1; 11-2) des Schalters (2-1; 2-2) zu erfassen und basierend auf der erfassten mindestens einen elektrischen Größe (7-1; 7-2) eine Temperatur und einen Strom (8-1; 8-2) in dem Schalter (2-1; 2-2) zu berechnen,
wobei die Überwachungseinrichtung (6-1; 6-2) dazu ausgebildet ist, den Schalter (2-1; 2-2) zu deaktivieren während die Temperatur einen vorgegebenen Temperaturbereich und der Strom (8-1; 8-2) einen vorgegebenen Strombereich überschreitet oder unterschreitet,
**dadurch gekennzeichnet, dass**
die Überwachungseinrichtung (6-1; 6-2) dazu ausgebildet ist, zum Erfassen der Temperatur eine zeitliche Änderung eines Mittelwerts des Stroms zu bestimmen.

2. Heißgetränkezubereitungsvorrichtung (1-1; 1-2) nach Anspruch 1 mit einem TRIAC (9) als steuerbarem Schalter (2-1; 2-2).

3. Heißgetränkezubereitungsvorrichtung (1-1; 1-2) nach Anspruch 2, wobei die Überwachungseinrichtung (6-1; 6-2) einen Analog-Digital-Wandler (10) aufweist, welcher mit dem Steuereingang (11-1; 11-2) des steuerbaren Schalters (2-1; 2-2) gekoppelt ist und dazu ausgebildet ist, als die elektrische Größe (7-1; 7-2) eine Spannung, welche zwischen dem Steuereingang (11-1; 11-2) und einem Bezugspotential (12-1; 12-2) anliegt, zu erfassen.

4. Heißgetränkezubereitungsvorrichtung (1-1; 1-2) nach Anspruch 3, wobei die Überwachungseinrichtung (6-1; 6-2) einen Verstärker (13) aufweist, welcher zwischen dem Analog-Digital-Wandler (10) und dem Steuereingang (11-1; 11-2) des steuerbaren Schalters (2-1; 2-2) angeordnet ist.

5. Heißgetränkezubereitungsvorrichtung (1-1; 1-2) nach einem der vorherigen Ansprüche 1 bis 4, wobei die Überwachungseinrichtung (6-1; 6-2) eine zweite Recheneinrichtung (14) und einen Speicher (15) aufweist, wobei die zweite Recheneinrichtung (14) dazu ausgebildet ist, zu unterschiedlichen Zeitpunkten erfasste Werte der elektrischen Größe (7-1; 7-2) in dem Speicher (15) zu speichern und basierend auf einer vorgegebenen Last, deren Strom (8-1; 8-2) durch den steuerbaren Schalter (2-1; 2-2) gesteuert wird, und den in dem Speicher (15) gespeicherten Werten der elektrischen Größe (7-1; 7-2) den durch den Schalter (2-1; 2-2) fließenden Strom (8-1; 8-2) und die Temperatur des Schalters (2-1; 2-2) zu berechnen.

6. Heißgetränkezubereitungsvorrichtung (1-1; 1-2) nach Anspruch 5, wobei in dem Speicher (15) Standardwerte für die Temperatur in dem Schalter (2-1; 2-2) und für den Sollwert des durch den Schalter (2-1; 2-2) fließenden Stroms (8-1; 8-2) gespeichert sind, welche die jeweilige Größe (7-1; 7-2) zu einem Einschaltzeitpunkt der Heißgetränkezubereitungsvorrichtung (1-1; 1-2) kennzeichnen, zu welchem die Stromversorgung der Heißgetränkezubereitungsvorrichtung (1-1; 1-2) eingeschaltet wird.

7. Heißgetränkezubereitungsvorrichtung (1-1; 1-2) nach einem der vorherigen Ansprüche 5 und 6, wobei die Überwachungseinrichtung (6-1; 6-2) eine Unterbrechungseinrichtung aufweist, welche dazu ausgebildet ist, zum Deaktivieren des Schalters (2-1; 2-2) die Verbindung zwischen der ersten Recheneinrichtung (4-1; 4-2) und dem Schalter (2-1; 2-2) zu unterbrechen.

8. Heißgetränkezubereitungsvorrichtung (1-1; 1-2) nach einem der vorherigen Ansprüche 5 bis 7, wobei die zweite Recheneinrichtung (14) und der Speicher (15) als Elemente der ersten Recheneinrichtung (4-1; 4-2) ausgebildet sind.

9. Heißgetränkezubereitungsvorrichtung (1-1; 1-2) nach Anspruch 8, wobei die Überwachungseinrichtung (6-1; 6-2) dazu ausgebildet ist, zum Deaktivieren des Schalters (2-1; 2-2) einem Steuermodul der ersten Recheneinrichtung (4-1; 4-2) ein Signal zum Deaktivieren des Schaltsteuersignals (5-1, 5-2) zu übermitteln.

10. Verfahren zum Betreiben einer Heißgetränkezubereitungsvorrichtung (1-1; 1-2), nach einem der Ansprüche 1 bis 9, mit einem steuerbaren Schalter (2-1; 2-2) und einer Recheneinrichtung (4-1; 4-2), welche dem steuerbaren Schalter (2-1; 2-2) ein Schaltsteuersignal (5-1, 5-2) bereitstellt, mit den Schritten:
- Erfassen (S1) mindestens einer elektrischen Größe (7-1; 7-2) an einem Steuereingang (11-1; 11-2) des Schalters (2-1; 2-2);
- Berechnen (S2) einer Temperatur und eines Stroms (8-1; 8-2) in dem Schalter (2-1; 2-2) basierend auf der erfassten mindestens einen elektrischen Größe (7-1; 7-2); und
- Deaktivieren (S3) des Schalters (2-1; 2-2) während die Temperatur einen vorgegebenen Temperaturbereich und der Strom (8-1; 8-2) einen vorgegebenen Strombereich überschreitet oder unterschreitet,
**dadurch gekennzeichnet, dass**
zum Erfassen der Temperatur eine zeitliche Änderung eines Mittelwerts des Stroms bestimmt wird.

## Claims

1. Hot beverage preparation apparatus (1-1; 1-2), in particular fully automatic coffee maker,
- with a controllable switch (2-1; 2-2), which is embodied to control a current (8-1; 8-2) through a number of electrical consumers (3-1; 3-2) in the hot beverage preparation apparatus (1-1; 1-2);
- with a first computer facility (4-1; 4-2), which is embodied to generate a switch control signal (5-1, 5-2) and provide it to the switch (2-1; 2-2); and
- with a monitoring facility (6-1; 6-2), which is embodied to capture at least one electrical variable (7-1; 7-2) at a control input (11-1; 11-2) of the switch (2-1; 2-2) and, based on the captured at least one electrical variable (7-1; 7-2), to calculate a temperature and a current (8-1; 8-2) in the switch (2-1; 2-2),
wherein the monitoring facility (6-1; 6-2) is embodied to deactivate the switch (2-1; 2-2) while the temperature exceeds or falls below a predefined temperature range and the current (8-1; 8-2) exceeds or falls below a predefined current range,
**characterised in that**
the monitoring facility (6-1; 6-2) is embodied to determine a temporal change in an average value of the current in order to capture the temperature.

2. Hot beverage preparation apparatus (1-1; 1-2) according to claim 1 with a TRIAC (9) as controllable switch (2-1; 2-2).

3. Hot beverage preparation apparatus (1-1; 1-2) according to claim 2, wherein the monitoring facility (6-1; 6-2) has an analogue-digital converter (10), which is coupled to the control input (11-1; 11-2) of the controllable switch (2-1; 2-2) and is embodied to capture as the electrical variable (7-1; 7-2) a voltage which is applied between the control input (11-1; 11-2) and a reference potential (12-1; 12-2).

4. Hot beverage preparation apparatus (1-1; 1-2) according to claim 3, wherein the monitoring facility (6-1; 6-2) has an amplifier (13), which is arranged between the analogue-digital converter (10) and the control input (11-1; 11-2) of the controllable switch (2-1; 2-2).

5. Hot beverage preparation apparatus (1-1; 1-2) according to one of the preceding claims 1 to 4, wherein the monitoring facility (6-1; 6-2) has a second computer facility (14) and a memory (15), wherein the second computer facility (14) is embodied to store values of the electrical variable (7-1; 7-2) captured at different points in time in the memory (15) and, based on a predefined load, the current (8-1; 8-2) thereof being controlled by the controllable switch (2-1; 2-2), and the values of the electrical variable (7-1; 7-2) stored in the memory (15), to calculate the current (8-1; 8-2) flowing through the switch (2-1; 2-2) and the temperature of the switch (2-1; 2-2).

6. Hot beverage preparation apparatus (1-1; 1-2) according to claim 5, wherein standard values for the temperature in the switch (2-1; 2-2) and for the setpoint value of the current (8-1; 8-2) flowing through the switch (2-1; 2-2) are stored in the memory (15), which standard values characterise the respective variable (7-1; 7-2) at a start-up time of the hot beverage preparation apparatus (1-1; 1-2), at which the current supply of the hot beverage preparation apparatus (1-1; 1-2) is started up.

7. Hot beverage preparation apparatus (1-1; 1-2) according to one of the preceding claims 5 and 6, wherein the monitoring facility (6-1; 6-2) has an interruption facility, which is embodied to interrupt the connection between the first computer facility (4-1; 4-2) and the switch (2-1; 2-2) in order to deactivate the switch (2-1; 2-2).

8. Hot beverage preparation apparatus (1-1; 1-2) according to one of the preceding claims 5 to 7, wherein the second computer facility (14) and the memory (15) are embodied as elements of the first computer facility (4-1; 4-2).

9. Hot beverage preparation apparatus (1-1; 1-2) according to claim 8, wherein the monitoring facility (6-1; 6-2) is embodied to transfer a signal for deactivating the switch control signal (5-1; 5-2) to a control module of the first computer facility (4-1; 4-2) in order to deactivate the switch (2-1; 2-2).

10. Method for operating a hot beverage preparation apparatus (1-1; 1-2) according to one of claims 1 to 9, with a controllable switch (2-1; 2-2) and a computer facility (4-1; 4-2), which provides the controllable switch (2-1; 2-2) with a switch control signal (5-1; 5-2), with the steps:
- capturing (S1) at least one electrical variable (7-1; 7-2) at a control input (11-1; 11-2) of the switch (2-1; 2-2);
- Calculating (S2) a temperature and a current (8-1; 8-2) in the switch (2-1; 2-2) based on the captured at least one electrical variable (7-1; 7-2); and
- Deactivating (S3) the switch (2-1; 2-2) while the temperature exceeds or falls below a predefined temperature range and the current (8-1; 8-2) exceeds or falls below a predefined current range,
**characterised in that**
a temporal change in an average value of the current is determined in order to capture the temperature.

## Revendications

1. Appareil de préparation de boissons chaudes (1-1; 1-2), en particulier machine à café entièrement automatique,
- avec un commutateur réglable (2-1; 2-2), lequel est conçu pour commander un courant (8-1; 8-2) par une pluralité de récepteurs électriques (3-1; 3-2) dans l'appareil de préparation de boissons chaudes (1-1; 1-2);
- avec un premier dispositif de calcul (4-1; 4-2), lequel est conçu pour produire un signal de commande de commutation (5-1, 5-2) et le fournir au commutateur (2-1; 2-2); et
- avec un dispositif de contrôle (6-1; 6-2), lequel est conçu pour détecter au moins une grandeur électrique (7-1; 7-2) à une entrée de commande (11-1; 11-2) du commutateur (2-1; 2-2) et, sur base de la au moins une grandeur électrique (7-1; 7-2) détectée, de calculer une température et un courant (8-1; 8-2) dans le commutateur (2-1; 2-2), le dispositif de contrôle (6-1; 6-2) étant conçu pour désactiver le commutateur (2-1; 2-2) pendant que la température dépasse positivement ou négativement une plage de températures prédéfinie et que le flux (8-1; 8-2) dépasse positivement ou négativement une plage de flux prédéfinie,
**caractérisé en ce que**
le dispositif de contrôle (6-1; 6-2) est conçu pour déterminer, à des fins de détection de la température, la variation temporelle d'une valeur moyenne du courant.

2. Appareil de préparation de boissons chaudes (1-1; 1-2) selon la revendication 1 avec un TRIAC (9) en guise de commutateur réglable (2-1; 2-2).

3. Appareil de préparation de boissons chaudes (1-1; 1-2) selon la revendication 2, le dispositif de contrôle (6-1; 6-2) présentant un convertisseur analogique-numérique (10), lequel est couplé avec l'entrée de commande (11-1; 11-2) du commutateur réglable (2-1; 2-2) et est conçu pour détecter une tension, entre l'entrée de commande (11-1; 11-2) et un potentiel de référence (12-1; 12-2), comme grandeur électrique (7-1; 7-2).

4. Appareil de préparation de boissons chaudes (1-1; 1-2) selon la revendication 3, le dispositif de contrôle (6-1; 6-2) présentant un amplificateur (13) disposé entre le convertisseur analogique-numérique (10) et l'entrée de commande (11-1; 11-2) du commutateur réglable (2-1; 2-2).

5. Appareil de préparation de boissons chaudes (1-1; 1-2) selon l'une des revendications précédentes 1 à 4, le dispositif de contrôle (6-1; 6-2) présentant un deuxième dispositif de calcul (14) et une mémoire (15), ce deuxième dispositif de calcul (14) étant conçu pour, à différents moments, mémoriser des valeurs détectées de la grandeur électrique (7-1; 7-2) dans la mémoire (15) et, sur base d'une charge prédéfinie, dont le courant (8-1; 8-2) est commandé par le commutateur réglable (2-1; 2-2), et des valeurs mémorisées dans la mémoire (15) de la grandeur électrique (7-1; 7-2), calculer le courant (8-1; 8-2) circulant à travers le commutateur (2-1; 2-2) ainsi que la température du commutateur (2-1; 2-2).

6. Appareil de préparation de boissons chaudes (1-1; 1-2) selon la revendication 5, les valeurs standards de température dans le commutateur (2-1; 2-2) et pour la valeur théorique du courant (8-1; 8-2) circulant à travers le commutateur (2-1; 2-2) étant mémorisées dans la mémoire (15), lesquelles caractérisent la grandeur respective (7-1; 7-2) à un moment de mise sous tension de l'appareil de préparation de boissons chaudes (1-1; 1-2), auquel l'alimentation en courant de l'appareil de préparation de boissons chaudes (1-1; 1-2) est branchée.

7. Appareil de préparation de boissons chaudes (1-1; 1-2) selon l'une des revendications précédentes 5 et 6, le dispositif de contrôle (6-1; 6-2) présentant un dispositif d'interruption conçu, à des fins de désactivation du commutateur (2-1; 2-2), pour interrompre la liaison entre le premier dispositif de calcul (4-1; 4-2) et le commutateur (2-1; 2-2).

8. Appareil de préparation de boissons chaudes (1-1; 1-2) selon l'une des revendications précédentes 5 à 7, le deuxième dispositif de calcul (14) et la mémoire (15) étant conçus comme des éléments du premier dispositif de calcul (4-1; 4-2).

9. Appareil de préparation de boissons chaudes (1-1; 1-2) selon la revendication 8, le dispositif de contrôle (6-1; 6-2) étant conçu, pour la désactivation du commutateur (2-1; 2-2), pour transmettre à un module de commande du premier dispositif de calcul (4-1; 4-2), un signal de désactivation du signal de commande de commutation (5-1, 5-2).

10. Procédé d'exploitation d'un appareil de préparation de boissons chaudes (1-1; 1-2) selon l'une des revendications 1 à 9, avec un commutateur réglable (2-1; 2-2) et un dispositif de calcul (4-1; 4-2), lequel fournit au commutateur réglable (2-1; 2-2) un signal de commande de commutation (5-1, 5-2), avec les étapes suivantes:
- détection (S1) d'au moins une grandeur électrique (7-1; 7-2) à une entrée de commande (11-1; 11-2) du commutateur (2-1; 2-2);
- calcul (S2) d'une température et d'un courant (8-1; 8-2) dans le commutateur (2-1; 2-2) sur base de la au moins une grandeur électrique 7-1; 7-2) détectée; et
- désactivation (S3) du commutateur (2-1; 2-2) pendant que la température dépasse positivement ou négativement une plage de températures prédéfinie et que le flux (8-1; 8-2) dépasse positivement ou négativement une plage de flux prédéfinie,
**caractérisé en ce que**
pour la détection de la température, la variation temporelle d'une valeur moyenne du courant est déterminée.
